# EUROPÄISCHE PATENTSCHRIFT

(11) **EP 2 913 961 B1**
(45) Veröffentlichungstag und Bekanntmachung des Hinweises auf die Patenterteilung: **07.08.2019**
(21) Anmeldenummer: 15156840.9
(22) Anmeldetag: 27.02.2015
(51) Int. Cl.: H04L 12/28

(54) **Verfahren und System zur Fernsteuerung und/oder Fernüberwachung des Betriebs eines Haushaltsgeräts mit Hilfe eines Kommunikationsgeräts**
METHOD AND SYSTEM FOR REMOTE CONTROL AND/OR REMOTE MONITORING OF THE OPERATION OF A HOUSEHOLD APPLIANCE WITH THE AID OF A COMMUNICATION DEVICE
PROCÉDÉ ET SYSTÈME DESTINÉS À LA TÉLÉCOMMANDE ET/OU À LA TÉLÉSURVEILLANCE DU FONCTIONNEMENT D'UN APPAREIL MÉNAGER À L'AIDE D'UN APPAREIL DE COMMUNICATION

(30) Priorität: 27.02.2014 DE 102014203580
(43) Veröffentlichungstag der Anmeldung: 02.09.2015
(73) Patentinhaber: BSH Hausgeräte GmbH, 81739 München (DE)
(72) Erfinder: Häpp, Claudia, 80639 München (DE); Kober, Christoph, 83624 Otterfing (DE); Linder, Markus, 82362 Weilheim (DE); Pietsch, Ingo, 81829 München (DE)

(56) Entgegenhaltungen:
- EP-A1- 2 833 596
- US-A1- 2012 239 221

## Beschreibung

Die Erfindung betrifft ein Verfahren zur Fernsteuerung und/oder Fernüberwachung des Betriebs eines Haushaltsgeräts mit Hilfe eines Kommunikationsgeräts eines Benutzers, wobei das Haushaltsgerät an ein lokales Heimnetzwerk angebunden ist und das Kommunikationsgerät mit einem Internetserver kommuniziert, auf welchem ein Benutzerkonto des Benutzers geführt wird, auf welchem Daten bezüglich des Haushaltsgeräts abgelegt sind und auf welchem das Haushaltsgerät somit registriert ist, und wobei die Fernsteuerung und/oder Fernüberwachung des Haushaltsgeräts durch das Kommunikationsgerät unter Zugriff auf die Daten des Benutzerkontos und unter Vermittlung des lokalen Heimnetzwerks erfolgt. Die Erfindung betrifft außerdem ein System, welches zum Durchführen eines solchen Verfahrens ausgebildet ist.

Es ist bereits Stand der Technik, ein Haushaltsgerät mit einem Kommunikationsmodul auszustatten, über welches das Haushaltsgerät an ein lokales Heimnetzwerk und beispielsweise über einen Router des Heimnetzwerks an das Internet kommunikationstechnisch angebunden werden kann. Der Benutzer des Haushaltsgeräts hat dann die Möglichkeit, mit Hilfe eines entsprechenden Kommunikationsgeräts - beispielsweise eines mobilen Endgeräts, wie zum Beispiel eines Mobiltelefons oder eines Tablet-PCs - unter Vermittlung des lokalen Heimnetzwerks den Betrieb des Haushaltsgeräts zu steuern bzw. zu überwachen. Die Fernsteuerung und/oder Fernüberwachung erfolgt dabei unter Zugriff auf Daten, welche auf einem Internetserver zu einem persönlichen Benutzerkonto des Benutzers abgelegt sind. Es wird also vorausgesetzt, dass auf dem Internetserver ein entsprechendes Benutzerkonto angelegt ist. Diesem Benutzerkonto können auch mehrere Haushaltsgeräte zugeordnet werden, welche an dasselbe Heimnetzwerk angebunden sind und welche somit von dem Benutzerkonto aus ferngesteuert und/oder fernüberwacht werden können. Der Zugriff auf die Daten des Benutzerkontos setzt üblicherweise voraus, dass der Benutzer seinen Benutzernamen (Identifikator bzw. Kennung) und in der Regel auch ein persönliches Passwort eingeben und sich somit authentifizieren muss. Diese Kennungsdaten des Benutzers können bekanntlich an einem PC oder einem tragbaren Endgerät als Kommunikationsgerät eingegeben werden. Um den Zugriff auf das Benutzerkonto zu ermöglichen, kann auf dem tragbaren Endgerät beispielsweise eine entsprechende Applikation (Computerprogramm) installiert und durch den Benutzer aktiviert werden. Diese Applikation ermöglicht dann die Fernsteuerung und/oder Fernüberwachung des Haushaltsgeräts.

Eine Datenkommunikation zwischen Haushaltsgeräten einerseits und einem Internetserver bzw. einem tragbaren Kommunikationsendgerät andererseits wird beispielsweise durch das System "Home Connect" ermöglicht, welches von dem Hause der Anmelderin angeboten wird.

Die Fernsteuerung von Haushaltsgeräten mit Hilfe eines tragbaren Kommunikationsendgeräts ist bereits beispielsweise in den Dokumenten WO 01/28068 A1 und US 2012/239221 A1 beschrieben.

Es ist Aufgabe der Erfindung, die Fernsteuerung und/oder Fernüberwachung von Haushaltsgeräten im Vergleich zum Stand der Technik zu verbessern.

Diese Aufgabe wird erfindungsgemäß durch ein Verfahren sowie durch ein System mit den Merkmalen gemäß den jeweiligen unabhängigen Patentansprüchen gelöst.

Vorteilhafte Ausführungen der Erfindung sind Gegenstand der abhängigen Patentansprüche, der Beschreibung und der Figuren.

Ein erfindungsgemäßes Verfahren dient zur Fernsteuerung und/oder Fernüberwachung des Betriebs eines Haushaltsgeräts mittels eines Kommunikationsgeräts eines Benutzers. Das Haushaltsgerät ist an ein lokales Heimnetzwerk angebunden, beispielsweise an einen Router, insbesondere einen WLAN-Router. Das Kommunikationsgerät kommuniziert mit einem Internetserver, auf welchem ein Benutzerkonto des Benutzers geführt wird, auf welchem Daten bezüglich des Haushaltsgeräts abgelegt sind und auf welchem somit das Haushaltsgerät registriert ist. Durch diese Registrierung ist das Haushaltsgerät dem Benutzerkonto zugeordnet. Die Fernsteuerung und/oder Fernüberwachung des Haushaltsgeräts erfolgt durch das Kommunikationsgerät unter Zugriff auf die Daten des Benutzerkontos sowie unter Vermittlung des lokalen Heimnetzwerks. Erfindungsgemäß ist vorgesehen, dass auf dem selben Benutzerkonto des Benutzers zusätzlich Daten bezüglich eines weiteren Haushaltsgeräts abgelegt werden, welches an ein von dem einen Heimnetzwerk separates weiteres Heimnetzwerk - insbesondere in einem anderen Haushalt und somit an einem anderen Ort - angeschlossen ist. Dies bedeutet, dass auf demselben Benutzerkonto des Benutzers auch dieses weitere Haushaltsgerät registriert wird, welches an einem ganz anderen Ort als das eine Haushaltsgerät aufgestellt ist. Die Fernsteuerung und/oder Fernüberwachung des Betriebs des weiteren Haushaltsgeräts erfolgt ebenfalls unter Zugriff auf die Daten desselben Benutzerkontos.

Erfindungsgemäß wird demnach ermöglicht, dass von ein und demselben Benutzerkonto aus, welches auf dem Internetserver geführt wird, mehrere Haushaltsgeräte ferngesteuert und/oder fernüberwacht werden können, welche an unterschiedlichen Orten bzw. in unterschiedlichen Haushalten angeordnet und somit an verschiedene lokale Heimnetzwerke bzw. an verschiedene Router kommunikationstechnisch angeschlossen sind. Ein derartiger "Multi-Aplliance"-Zugriff basiert auf der Erkenntnis, dass im Stand der Technik mehrere gleiche Applikationen auf einem tragbaren bzw. mobilen Endgerät installiert werden müssen, um mehrere Haushaltsgeräte zu steuern und/oder zu überwachen, welche an verschiedenen Standorten stehen. Da jedoch durch die Restriktionen der mobilen Betriebssysteme lediglich eine einzige Instanz einer bestimmten Applikation pro Gerät installiert werden kann, müssten im Stand der Technik mehrere mobile Geräte genutzt werden, um mehrere Haushaltsgeräte, welche an verschiedenen Standorten stehen, fernsteuern und/oder fernüberwachen zu können. Alternativ müsste sich der Benutzer im Stand der Technik bei der Applikation abmelden, um sich dann wieder mit einer zweiten Kennung anzumelden und so zwischen den diversen Orten der Haushaltsgeräte zu wechseln. Dieses Problem wird durch die Erfindung dadurch gelöst, dass durch den Internetserver und insbesondere auch eine entsprechende Applikation auf dem Kommunikationsgerät zugelassen wird, dass auf ein und demselben Benutzerkonto mehrere Haushaltsgeräte von unterschiedlichen Standorten registriert und diese Haushaltsgeräte somit von diesem Benutzerkonto aus ferngesteuert und/oder fernüberwacht werden können. Für einen Benutzer, der beispielsweise eine Zweitwohnung hat, erübrigt sich somit der Einsatz von weiteren Kommunikationsgeräten mit den damit verbundenen Nachteilen.

Unter einem Haushaltsgerät wird vorliegend insbesondere ein Gerät verstanden, welches zur Haushaltsführung eingesetzt wird. Dies kann insbesondere ein Haushaltsgroßgerät sein, wie beispielsweise ein Gerät zur Pflege von Wäschestücken, ein Haushaltsgerät zur Zubereitung von Lebensmitteln, beispielsweise ein Gargerät, wie zum Beispiel ein Backofen oder ein Herd, ein Haushaltsgerät zum Lagern und Konservieren von Lebensmitteln, wie ein Haushaltskältegerät, beispielsweise ein Kühlgerät oder ein Gefriergerät oder eine Kühl-Gefrierkombination, ein Klimagerät oder eine Geschirrspülmaschine. Ein Gerät zur Pflege von Wäschestücken kann dabei eine Waschmaschine, ein Wäschetrockner oder ein Waschtrockner sein. Das Haushaltsgerät kann aber auch ein Haushaltskleingerät sein, wie beispielsweise ein Kaffeevollautomat oder eine Küchenmaschine.

Vorzugsweise wird als Kommunikationsgerät ein tragbares bzw. mobiles Kommunikationsendgerät verwendet, insbesondere ein Mobiltelefon (Smartphone) oder aber ein Tablet-PC. Die Fernsteuerung und/oder Fernüberwachung erfolgt somit mit Hilfe eines mobilen Endgeräts. Diese Ausführungsform macht sich die Tatsache zu nutze, dass heutzutage nahezu jeder über ein Mobiltelefon oder aber einen Tablet-PC verfügt, auf welchem sogenannte Applikationen (Computerprogramme) installiert und ausgeführt werden können. Eine entsprechende Applikation kann für die Fernsteuerung und/oder Fernüberwachung der Haushaltsgeräte bereitgestellt werden.

Es ist weiterhin vorgesehen, dass auf dem Internetserver ein von dem einen Benutzerkonto separates weiteres Benutzerkonto eines anderen Benutzers geführt wird, wobei sowohl auf dem einen als auch auf dem weiteren Benutzerkonto Daten bezüglich ein und desselben Haushaltsgeräts abgelegt werden. Die Fernsteuerung und/oder Fernüberwachung dieses Haushaltsgeräts kann dann wahlweise unter Zugriff auf das eine oder das weitere Benutzerkonto durchgeführt werden. Dies bedeutet also, dass ein und dasselbe Haushaltsgerät auf zumindest zwei voneinander separaten Benutzerkonten auf dem Internetserver registriert und somit von diesen beiden Benutzerkonten aus gesteuert und/oder überwacht werden kann. Dieser "Mutli-User"-Zugriff hat den Vorteil, dass mehrere Benutzer sich mit ihren individuellen Kennungsdaten (Benutzername, E-Mail Adresse, Passwort und dergleichen) registrieren und auf das selbe Haushaltsgerät zugreifen können. Die Erfindung basiert dabei auf der Erkenntnis, dass sich mehrere Benutzer - beispielsweise innerhalb einer Familie - im Stand der Technik ein einziges Benutzerkonto bzw. einen einzigen Nutzerzugang teilen müssten, um auf ein bestimmtes Haushaltsgerät zugreifen zu können. Die Erfindung schafft hier eine Abhilfe, indem ein und dasselbe Haushaltsgerät von verschiedenen Benutzerkonten aus ferngesteuert und/oder fernüberwacht werden kann.

In diesem Zusammenhang ist vorgesehen, dass die Daten bezüglich des Haushaltsgeräts zunächst auf dem einen Benutzerkonto abgelegt werden und dieses Haushaltsgerät somit zunächst auf dem einen Benutzerkonto registriert wird. Das Ablegen der Daten auf dem weiteren Benutzerkonto bzw. die Registrierung dieses Haushaltsgeräts auf dem weiteren Benutzerkonto kann nur unter der Voraussetzung erfolgen, dass der Internetserver eine Zustimmungsnachricht des Benutzers des einen Benutzerkontos empfängt, welche unter Zugriff auf das eine Benutzerkonto generiert wird. Es wird also unterschieden, ob sich bereits ein Benutzer für ein bestimmtes Haushaltsgerät mit einer entsprechenden Applikation registriert hat oder nicht. Ist dies nicht der Fall, wird diesem ersten Benutzer die Möglichkeit bereitgestellt, die Registrierung desselben Haushaltsgeräts auf anderen Benutzerkonten zuzulassen oder abzulehnen. Insgesamt kann ein und dasselbe Haushaltsgerät auch auf beliebig vielen Benutzerkonten registriert werden; jedoch kann pro Haushaltsgerät bevorzugt lediglich ein einziger "erster Benutzer" definiert werden, welcher die Registrierung des Haushaltsgeräts auf anderen Benutzerkonten zulassen oder ablehnen kann. Dieser erste Benutzer kann die Registrierung des Haushaltsgeräts auf anderen Benutzerkonten gegebenenfalls auch löschen.

Im Allgemeinen kann vorgesehen sein, dass der erste Benutzer, auf dessen Benutzerkonto die Daten zuerst abgelegt wurden bzw. auf dessen Benutzerkonto das Haushaltsgerät zuerst registriert wurde, von seinem Benutzerkonto aus eine bereits erfolgte Registrierung dieses Haushaltsgeräts auf einem anderen Benutzerkonto verwalten und somit beispielsweise überwachen und kontrollieren kann.

Es erweist sich als besonders vorteilhaft, wenn bei der Fernsteuerung und/oder Fernüberwachung durch das Kommunikationsgerät überprüft wird, ob das Kommunikationsgerät ein Netzwerksignal eines Routers des Heimnetzwerks empfängt und sich somit in der Reichweite des Heimnetzwerks befindet oder nicht. Befindet sich das Kommunikationsgerät innerhalb der Reichweite des Heimnetzwerks, kann die Fernsteuerung und/oder Fernüberwachung direkt und somit alleine über das Heimnetzwerk durchgeführt werden. Dies bedeutet, dass entsprechende Steuersignale von dem Kommunikationsgerät über das Heimnetzwerk an das Haushaltsgerät und/oder entsprechende Zustandssignale von dem Haushaltsgerät über das Heimnetzwerk an das Kommunikationsgerät übermittelt werden. Befindet sich das Kommunikationsgerät jedoch außerhalb der Reichweite des Heimnetzwerks, so kann die Fernsteuerung und/oder Fernüberwachung unter Vermittlung des Internetservers über das Internet durchgeführt werden. Hierzu wird die Internetverbindung des Kommunikationsgeräts - wie beispielsweise eine Mobilfunkverbindung und/oder ein anderes WLAN-Netzwerk - genutzt.

Vorzugsweise bleibt ein Benutzerkonto eines Benutzers auch nach dem Beenden einer durchgeführten Fernsteuerung und/oder Fernüberwachung eines Haushaltsgeräts mit dem Kommunikationsgerät auf dem Internetserver abgelegt. Dadurch wird eine einfache Verwaltung der Informationen und ein schneller, auch zukünftiger Zugriff ermöglicht.

Vorzugsweise wird bei einer zukünftigen weiteren gewollten Fernsteuerung und/oder Fernüberwachung eines Haushaltsgeräts mit dem Kommunikationsgerät durch einen Benutzer eine Berechtigungsprüfung des Benutzers anhand des bereits abgelegten Benutzerprofils durchgeführt. Dadurch kann eine schnelle und sichere Fernsteuerung und/oder Fernüberwachung erreicht werden. Ein Missbrauch eines Haushaltsgeräts durch einen Benutzer ist dadurch dauerhaft verhindert. Besonders vorteilhaft führt dies auch dazu, dass die Informationen des Benutzerprofils nicht auf dem Kommunikationsgerät gespeichert werden müssen, so dass der dortige Speicher für andere Daten genutzt werden kann. Ferner ist die Berechtigungsprüfung dann auch auf dem Internetserver durchführbar, insbesondere da dieser vorzugsweise eine größere und/oder schnellere Recheneinheit aufweist, als das Kommunikationsgerät. Die Berechtigungsprüfung kann dadurch auch sehr schnell erfolgen.

Die Erfindung betrifft außerdem ein System zur Fernsteuerung und/oder Fernüberwachung des Betriebs eines ein lokales Heimnetzwerk angebundenen Haushaltsgeräts, mit einem Kommunikationsgerät und einem Internetserver, welche zur Kommunikation miteinander ausgebildet sind, wobei auf dem Internetserver ein Benutzerkonto eines Benutzers des Kommunikationsgeräts bereitgestellt ist, auf welchem Daten bezüglich des Haushaltsgeräts abgelegt sind, und wobei das Kommunikationsgerät dazu ausgelegt ist, die Fernsteuerung und/oder Fernüberwachung des Haushaltsgeräts unter Zugriff auf die Daten des Benutzerkontos und unter Vermittlung des lokalen Heimnetzwerks durchzuführen. Auf dem selben Benutzerkonto des Benutzers sind zusätzlich Daten bezüglich eines weiteren Haushaltsgeräts abgelegt, welches an ein von dem einen Heimnetzwerk separates weiteres Heimnetzwerk angeschlossen ist, wobei das Kommunikationsgerät dazu ausgelegt ist, die Fernsteuerung und/oder Fernüberwachung des Betriebs des Haushaltsgeräts auch unter Zugriff auf die Daten des selben Benutzerkontos durchzuführen. Auf dem Internetserver wird ein von dem einen Benutzerkonto des ersten Benutzers separates weiteres Benutzerkonto eines zweiten Benutzers geführt. Der Internetserver ist dazu eingerichtet, die Daten bezüglich des Haushaltsgeräts auf dem weiteren Benutzerkonto des zweiten Benutzers unter der Voraussetzung abzulegen, dass der Internetserver eine Zustimmungsnachricht des ersten Benutzers empfängt, welche unter Zugriff auf das eine Benutzerkonto des ersten Benutzers generiert wird, sodass die Fernsteuerung und/ oder Fernüberwachung der Haushaltsgeräte wahlweise unter Zugriff auf das eine oder das weitere Benutzerkonto durchgeführt wird.

Die mit Bezug auf das erfindungsgemäße Verfahren vorgestellten bevorzugten Ausführungsformen und deren Vorteile gelten entsprechend für das erfindungsgemäße System.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:
- Fig. 1: in schematischer Darstellung ein System gemäß einer Ausführungsform der Erfindung;
- Fig. 2: ein Flussdiagramm eines Verfahrens gemäß einer Ausführungsform der Erfindung; und
- Fig. 3: ein Flussdiagramm eines Verfahrens gemäß einer Ausführungsform der Erfindung.

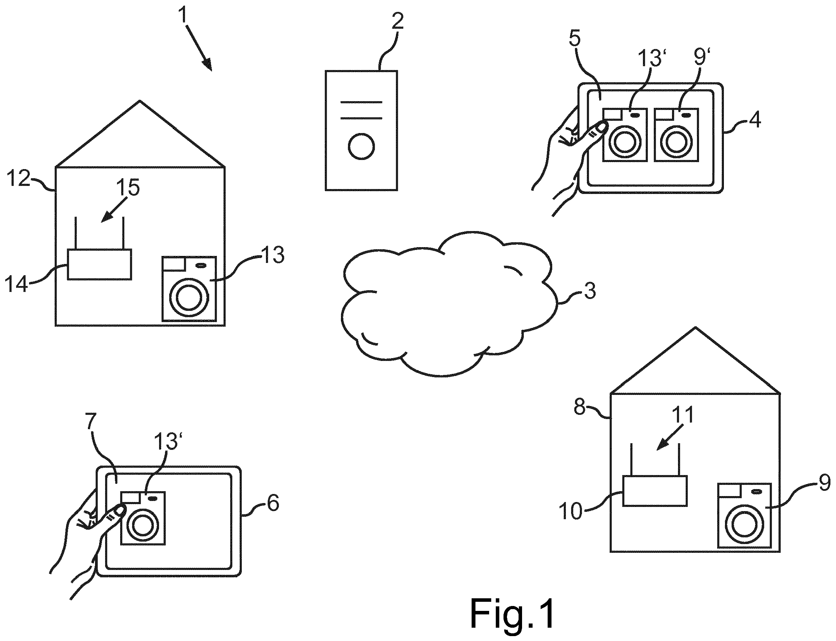

Ein in Fig. 1 dargestelltes System 1 umfasst einen Internetserver 2, welcher an das Internet 3 angebunden ist. Auf dem Internetserver 2 werden eine Vielzahl von Benutzerkonten geführt, welche jeweils zur Fernsteuerung und/oder Fernüberwachung des Betriebs von Haushaltsgeräten dienen. Durch diese Benutzerkonten können auch weitere Funktionalitäten um das Thema "Haushaltsgeräte" bereitgestellt werden, wie zum Beispiel Hilfe im Fehlfunktionsfall, Hilfe zur Benutzung der Haushaltsgeräte und dergleichen.

Zum System 1 gehört außerdem ein Kommunikationsgerät 4 (erstes Kommunikationsgerät), welches im Ausführungsbeispiel als ein tragbares bzw. mobiles Kommunikationsendgerät ausgebildet ist, etwa ein Mobiltelefon oder ein Tablet-PC. Das Kommunikationsgerät 4 weist ein Display 5 auf, auf welchem eine graphische Benutzeroberfläche erzeugt werden kann. Diese kann beispielsweise durch eine entsprechende Applikation bereitgestellt werden, welche auf dem Kommunikationsgerät 4 installiert wird. Das Display 5 kann beispielsweise ein Touchscreen mit einer berührungsempfindlichen Oberfläche sein. Auch das Kommunikationsgerät 4 weist Kommunikationsmittel zur Anbindung an das Internet 3 auf, etwa über ein Mobilfunknetz und/oder ein WLAN-Netz. Das Kommunikationsgerät 4 kann somit mit dem Internetserver 2 kommunizieren.

Während das erste Kommunikationsgerät 4 einem ersten Benutzer gehört, gehört ein weiteres (zweites) Kommunikationsgerät 6 einem zweiten Benutzer. Auch dieses zweite Kommunikationsgerät 6 ist im Ausführungsbeispiel als ein tragbares Kommunikationsendgerät ausgebildet, wie insbesondere ein Mobiltelefon oder ein Tablet-PC. Das zweite Kommunikationsgerät 6 weist ein Display 7 auf, auf welchem in entsprechender Weise eine graphische Benutzeroberfläche erzeugt werden kann, die durch eine entsprechende Applikation bereitgestellt wird, die auf dem Kommunikationsgerät 6 installiert und ausgeführt wird. Das Display 7 kann ebenfalls ein Touchscreen mit einer berührungsempfindlichen Oberfläche sein. Auch das Kommunikationsgerät 6 ist an das Internet 3 angebunden, etwa über ein Mobilfunknetz und/oder ein WLAN-Netz. Das Kommunikationsgerät 6 kann somit mit dem Internetserver 2 kommunizieren.

In einem Haushalt 8 des ersten Benutzers können sich insgesamt eine Vielzahl von Haushaltsgeräten befinden, von denen in Fig. 1 lediglich ein Haushaltsgerät 9 repräsentativ dargestellt ist. Kommunikationstechnisch ist das Haushaltsgerät 9 an einen WLAN-Router 10 und somit an ein erstes Heimnetzwerk 11 angeschlossen. Über den WLAN-Router 10 ist das Haushaltsgerät 9 an das Internet 3 angebunden.

In einem davon separaten Haushalt 12 des zweiten Benutzers - und somit an einem anderen Ort - können sich ebenfalls eine Vielzahl von Haushaltsgeräten befinden, von denen in Fig. 1 lediglich ein Haushaltsgerät 13 repräsentativ dargestellt ist. In dem zweiten Haushalt 12 ist ein WLAN-Router 14 und somit eine zweites Heimnetzwerk 15 bereitgestellt, an welchem bzw. an welches das Haushaltsgerät 13 kommunikationstechnisch angebunden ist. Über den WLAN-Router 14 ist das Haushaltsgerät 13 auch an das Internet 3 angebunden.

Zur Kommunikation mit dem jeweiligen Heimnetzwerk 11 bzw. 15 können die Haushaltsgeräte 9, 13 über entsprechende Kommunikationsmodule verfügen, welche zur drahtlosen Kommunikation mit dem jeweiligen WLAN-Router 10 bzw. 14 ausgebildet sind. Alternativ kann auch eine drahtgebundene Datenkommunikation vorgesehen sein.

Sowohl für den ersten Benutzer als auch für den zweiten Benutzer sind auf dem Internetserver 2 jeweilige, voneinander separat geführte Benutzerkonten bereitgestellt. Der erste Benutzer kann mittels seines Kommunikationsgeräts 4 auf sein Benutzerkonto auf dem Internetserver 2 zugreifen und über dieses Benutzerkonto den Betrieb des Haushaltsgeräts 9 steuern und/oder überwachen. Zu diesem Zwecke kann das Haushaltsgerät 9 auf dem Benutzerkonto des ersten Benutzers registriert werden, so dass auf dem Internetserver 2 Daten bezüglich des Haushaltsgeräts 9 abgelegt werden, die die Fernsteuerung und/oder Fernüberwachung ermöglichen. Damit der Benutzer auf sein Benutzerkonto auf dem Internetserver 2 zugreifen kann, ist zunächst eine Authentifizierung des Benutzers auf dem Internetserver 2 erforderlich. Dazu braucht der Benutzer beispielsweise einen entsprechenden Benutzernamen sowie ein Passwort.

Entsprechend kann auch der zweite Benutzer mit Hilfe seines Kommunikationsgeräts 6 auf sein Benutzerkonto auf dem Internetserver 2 zugreifen und über dieses Benutzerkonto den Betrieb des Haushaltsgeräts 3 steuern und/oder überwachen. Auch hier ist eine entsprechende Registrierung des Haushaltsgeräts 3 auf dem Benutzerkonto des zweiten Benutzers erforderlich, wie auch eine Authentifizierung des zweiten Benutzers mit Hilfe entsprechender Zugangsdaten.

Durch entsprechende Ausgestaltung des Internetservers 2 sowie der Applikationen auf den Kommunikationsgeräten 4, 6 wird ermöglicht, dass von ein und demselben Benutzerkonto aus und somit mit Hilfe ein und derselben Applikation nicht nur Haushaltsgeräte eines bestimmten Haushalts bzw. eines bestimmten Heimnetzwerks, sondern auch Haushaltsgeräte gesteuert und/oder überwacht werden können, die an einem anderen Ort stehen und somit an ein anderes Heimnetzwerk angeschlossen sind. So kann beispielsweise der erste Benutzer unter Verwendung seines Kommunikationsgeräts 4 sowie unter Zugriff auf die Daten seines Benutzerkontos nicht nur das Haushaltsgerät 9, sondern darüber hinaus auch das Haushaltsgerät 13 steuern und/oder überwachen, welches in dem zweiten Haushalt 12 aufgestellt ist. Dazu kann das Haushaltsgerät 13 auf dem Benutzerkonto des ersten Benutzers registriert werden, so dass auf diesem Benutzerkonto Zugriffsdaten bezüglich dieses Haushaltsgeräts 13 abgelegt werden können. Die auf dem Kommunikationsgerät 4 bereitgestellte Applikation kann entsprechend so implementiert werden, so dass durch die bereitgestellte graphische Benutzeroberfläche die Fernsteuerung und/oder Fernüberwachung der Haushaltsgeräte 9, 13 ermöglicht wird, was in Fig. 1 mit 9' und 13' schematisch veranschaulicht ist.

Der Betrieb des Haushaltsgeräts 13 kann folglich von zwei voneinander separaten Benutzerkonten aus ferngesteuert und/oder fernüberwacht werden. Die Zugriffsdaten des Haushaltsgeräts 13 sind nämlich sowohl auf dem ersten als auch auf dem zweiten Benutzerkonto abgelegt, so dass die Fernsteuerung und/oder Fernüberwachung des Haushaltsgeräts 13 wahlweise unter Zugriff auf das erste und/oder das zweite Benutzerkonto durchgeführt wird. In diesem Zusammenhang kann vorgesehen sein, dass bezüglich des Haushaltsgeräts 13 der Benutzer des zweiten Kommunikationsgeräts 16 ein "Super User" bzw. ein Master-Benutzer ist, welcher das Haushaltsgerät 13 zuerst auf seinem Benutzerkonto registriert hat. Dieser Master-Benutzer kann dann selbst entscheiden, ob das Haushaltsgerät 13 auf dem anderen Benutzerkonto registriert werden darf oder nicht. Damit das Haushaltsgerät 13 also auch auf dem Benutzerkonto des Benutzers des ersten Kommunikationsgeräts 4 registriert werden kann, wird vorausgesetzt, dass der Internetserver 2 eine entsprechende Zustimmungsnachricht von dem Benutzer des zweiten Kommunikationsgeräts 6 empfängt, welche beispielsweise unter Zugriff auf sein Benutzerkonto generiert wird.

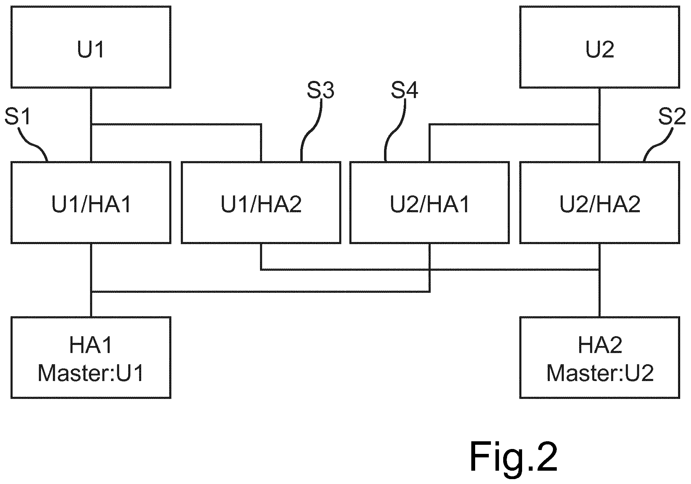

Eine solche Registrierung von Haushaltsgeräten bzw. Verknüpfung von Haushaltsgeräten mit den Benutzerkonten wird nachfolgend unter Bezugnahme auf Fig. 2 erläutert: In Fig. 2 bezeichnen U1 einen ersten Benutzer mit einem ersten Kommunikationsgerät 4, U2 einen zweiten Benutzer mit einem entsprechenden zweiten Kommunikationsgerät 6, HA1 ein erstes Haushaltsgerät 9, welches an ein erstes Heimnetzwerk 11 angebunden ist, sowie HA2 ein zweites Haushaltsgerät 13, welches an ein zweites Heimnetzwerk 15 angebunden ist. Gemäß Schritt S1 wird zunächst das Haushaltsgerät HA1 auf dem Benutzerkonto des ersten Benutzers U1 registriert, so dass bezüglich des ersten Haushaltsgeräts HA1 der erste Benutzer U1 ein "Super User" bzw. ein Master-Benutzer ist. Gemäß Schritt S2 wird das Haushaltsgerät HA2 erstmals registriert, und zwar auf dem Benutzerkonto des zweiten Benutzers U2. Bezüglich des zweiten Haushaltsgeräts HA2 stellt also der zweite Benutzer U2 den Master-Benutzer dar.

Gemäß Schritt S3 kann nun das Haushaltsgerät HA2 auch zum Benutzerkonto des ersten Benutzers U1 registriert werden, um den Zugriff auch von diesem Benutzerkonto aus zu ermöglichen. Diese Registrierung erfolgt jedoch nur unter der Voraussetzung, dass der Master-Benutzer U2 dies erlaubt. Erteilt der Master-Benutzer U2 seine Zustimmung, kann dann auch der erste Benutzer U1 von seinem Benutzerkonto aus auf das zweite Haushaltsgerät HA2 zugreifen, ohne dass eine weitere, explizite Zustimmung des Master-Benutzers U2 nötig ist. Der Master-Benutzer U2 hat jedoch jederzeit die Möglichkeit, die Registrierung des zweiten Haushaltsgeräts HA2 auf dem Benutzerkonto des ersten Benutzers U1 zu löschen.

Entsprechend kann gemäß Schritt S4 auch das erste Haushaltsgerät HA1 zum Benutzerkonto des zweiten Benutzers U2 registriert werden, wenn der Master-Benutzer U1 dem zustimmt.

Sowohl die Applikation auf dem jeweiligen Kommunikationsgerät 4, 6 als auch das Kommunikationsmodul des jeweiligen Haushaltsgeräts 9, 13 sind also derart konzipiert, dass mehrere Nutzer dasselbe Haushaltsgerät 9, 13 mit unterschiedlichen Benutzerkonten registrieren können. Das vorgeschlagene Verfahren ist grundsätzlich für beliebig viele weitere Benutzer möglich, es kann jedoch pro Haushaltsgerät 9, 13 nur einen einzigen Master-Benutzer geben. Dieser hat im Vergleich zu anderen Benutzern mehr Rechte und kann beispielsweise die Registrierung anderer Benutzer in Bezug auf das jeweilige Haushaltsgerät 9, 13 löschen.

Die Applikation auf dem Kommunikationsgerät 4, 6 wird beim Verknüpfen dieses Kommunikationsgeräts 4, 6 mit einem Haushaltsgerät 9, 13 in dem jeweiligen Heimnetzwerk 11, 15 konfiguriert und prägt die Benutzeroberfläche entsprechend aus. Befindet sich der Benutzer innerhalb der Reichweite des Heimnetzwerks 11, 15 kann durch Abfrage der jeweils am Internetserver 2 dem jeweiligen Benutzerkonto bekannten bzw. zugeordneten Haushaltsgeräte 9, 13 auch auf das jeweils andere Haushaltsgerät 9, 13 zugegriffen werden. Dies bedeutet, dass der Benutzer auch auf das Haushaltsgerät 13 zugreifen kann, wenn er sich in der Reichweite des Heimnetzwerks 11 gemäß Fig. 1 befindet. Auf die Haushaltsgeräte 9, 13 kann aber auch außerhalb der WLAN-Netze zugegriffen werden. Hierzu wird die Internetverbindung des Kommunikationsgeräts 4, 6 genutzt, wie beispielsweise die Mobilfunkverbindung oder aber die Verbindung zu einem anderen WLAN-Netz. Die Applikation evaluiert für jedes Haushaltsgerät 9, 13, ob eine Verbindung zum Haushaltsgerät 9, 13 direkt über ein WLAN-Netz oder aber über das Internet genutzt wird. Falls keine lokale Verbindung über WLAN möglich ist, wird versucht, auf das Haushaltsgerät 9, 13 über die Mobilfunkverbindung zuzugreifen. Der Benutzer kann auf beide Haushaltsgeräte 9, 13 gleichzeitig zugreifen, sofern eine Internetverbindung besteht.

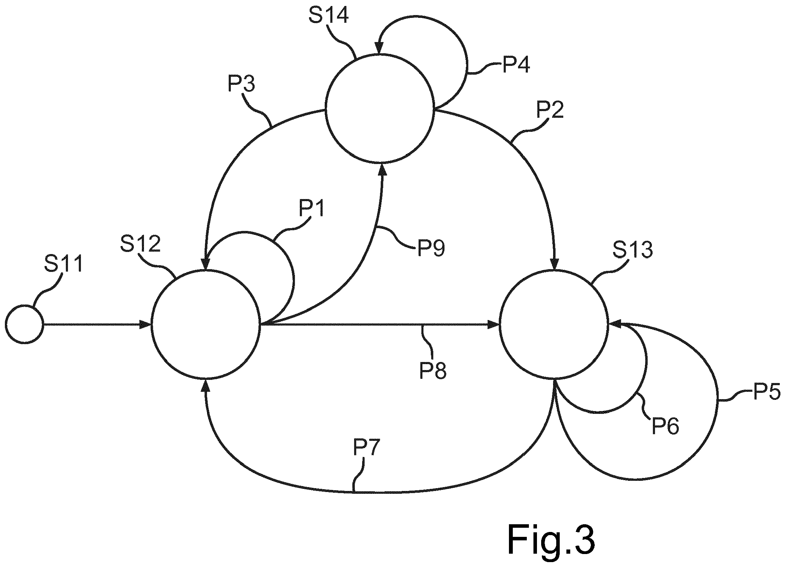

Ein derartiges Verfahren ist in Fig. 3 in form einer Zustandsmaschine abgebildet: Das Verfahren startet in einem ersten Schritt S11 und geht zu einem weiteren Schritt S12 über, in welchem das Kommunikationsgerät 4, 6 überprüft, ob eine Kommunikationsverbindung zu einem WLAN-Netz oder aber eine Mobilfunkverbindung bzw. eine andere Internetverbindung überhaupt möglich ist. Diese Überprüfung erfolgt fortlaufend, was in der Zustandsmaschine gemäß Fig. 3 mit einer Pfeildarstellung P1 veranschaulicht ist. Ist keine Kommunikationsverbindung möglich, so verbleibt das Verfahren im Schritt S12. Ausgehend von diesem Zustand gemäß S12 sind zwei Zustandsänderungen möglich: Ist eine WLAN-Verbindung und somit eine Datenverbindung mit einem Heimnetzwerk 11, 15 möglich, geht das Verfahren zu einem weiteren Schritt S13 über. Ist wiederum eine Mobilfunkverbindung möglich, geht das Verfahren zu einem Schritt S14 über.

Ausgehend von dem Zustand gemäß S14 geht das Verfahren dann sofort zum Schritt S13 über, wenn eine WLAN-Verbindung detektiert wird (Pfeildarstellung P2). Wird im Schritt S14 detektiert, dass keine Datenverbindung besteht, kehrt das Verfahren gemäß Pfeildarstellung P3 zum Schritt S12 zurück. Außerdem wird gemäß Pfeildarstellung P4 im Zustand gemäß S14 fortlaufend überprüft, ob die Internetverbindung zum Internetserver 2 möglich ist.

Gemäß Zustand S14 kommuniziert das Kommunikationsgerät 4, 6 also mit dem Internetserver 2, so dass die Fernsteuerung und/oder Fernüberwachung unter Vermittlung des Internetservers 2 erfolgt. Gemäß Zustand S13 befindet sich das Kommunikationsgerät 4, 6 in der Reichweite eines Heimnetzwerks 11, 15, so dass die Fernsteuerung und/oder Fernüberwachung alleine über das lokale Heimnetzwerk 11, 15 erfolgen kann. Die Kommunikation mit dem Internetserver 2 erfolgt hier über den jeweiligen Router 10 bzw. 14. Gemäß Zustand S13 werden beide Datenverbindungen fortlaufend überprüft, nämlich einerseits die WLAN-Verbindung zum Haushaltsgerät (P5) sowie andererseits die Internetverbindung über den Router 10, 14 zum Internetserver 2 (P6). Wird gemäß Zustand S13 detektiert, dass keine Verbindung besteht, kehrt das Verfahren gemäß Pfeildarstellung P7 zum Zustand S12 zurück. Von diesem Zustand aus kann das Verfahren wiederum zum Zustand S13 (P8) oder zum Zustand S14 (P9) wechseln.

Vorzugsweise bleibt ein Benutzerkonto eines Benutzers auch nach dem Beenden einer durchgeführten Fernsteuerung und/oder Fernüberwachung eines Haushaltsgeräts mit dem Kommunikationsgerät auf dem Internetserver abgelegt. Dadurch wird eine einfache Verwaltung der Informationen und ein schneller, auch zukünftiger Zugriff ermöglicht.

Vorzugsweise wird bei einer zukünftigen weiteren gewollten Fernsteuerung und/oder Fernüberwachung eines Haushaltsgeräts mit dem Kommunikationsgerät durch einen Benutzer eine Berechtigungsprüfung des Benutzers anhand des bereits abgelegten Benutzerprofils durchgeführt. Dadurch kann eine schnelle und sichere Fernsteuerung und/oder Fernüberwachung erreicht werden. Ein Missbrauch eines Haushaltsgeräts durch einen Benutzer ist dadurch dauerhaft verhindert. Besonders vorteilhaft führt dies auch dazu, dass die Informationen des Benutzerprofils nicht auf dem Kommunikationsgerät gespeichert werden müssen, so dass der dortige Speicher für andere Daten genutzt werden kann. Ferner ist die Berechtigungsprüfung dann auch auf dem Internetserver durchführbar, insbesondere da dieser vorzugsweise eine größere und/oder schnellere Recheneinheit aufweist, als das Kommunikationsgerät. Die Berechtigungsprüfung kann dadurch auch sehr schnell erfolgen.

### Bezugszeichenliste

- 1: System
- 2: Internetserver
- 3: Internet
- 4: erstes Kommunikationsgerät
- 5: Display
- 6: zweites Kommunikationsgerät
- 7: Display
- 8: Haushalt
- 9: Haushaltsgerät
- 10: WLAN-Router
- 11: erstes Heimnetzwerk
- 12: Haushalt
- 13: Haushaltsgerät
- 14: WLAN-Router
- 15: zweites Heimnetzwerk
- HA1: erstes Haushaltsgerät
- HA2: zweites Haushaltsgerät
- P1: Pfeildarstellung
- P2: Pfeildarstellung
- P3: Pfeildarstellung
- P4: Pfeildarstellung
- P5: Pfeildarstellung
- P6: Pfeildarstellung
- P7: Pfeildarstellung
- P8: Pfeildarstellung
- P9: Pfeildarstellung
- S1: Schritt/Zustand
- S2: Schritt/Zustand
- S3: Schritt/Zustand
- S4: Schritt/Zustand
- S11: Schritt/Zustand
- S12: Schritt/Zustand
- S13: Schritt/Zustand
- S14: Schritt/Zustand
- U1: erster Benutzer
- U2: zweiter Benutzer

## Patentansprüche

1. Verfahren zur Fernsteuerung und/oder Fernüberwachung des Betriebs eines Haushaltsgeräts (9, 13) zur Haushaltsführung mithilfe eines Kommunikationsgeräts (4) eines ersten Benutzers (U1), wobei das Haushaltsgerät (9) an ein lokales Heimnetzwerk (11) angebunden ist und das Kommunikationsgerät (4) mit einem Internetserver (2) kommuniziert, auf welchem ein Benutzerkonto des ersten Benutzers (U1) geführt wird, auf welchem Daten bezüglich des Haushaltsgeräts (9) abgelegt sind, und wobei die Fernsteuerung und/oder Fernüberwachung des Haushaltsgeräts (9) durch das Kommunikationsgerät (4) unter Zugriff auf die Daten des Benutzerkontos des ersten Benutzers (U1) und unter Vermittlung des lokalen Heimnetzwerks (11) erfolgt, wobei auf demselben Benutzerkonto des ersten Benutzers (U1) zusätzlich Daten bezüglich eines weiteren Haushaltsgeräts (13), welches an ein von dem einen Heimnetzwerk (11) separates weiteres Heimnetzwerk (15) angeschlossen ist, abgelegt werden, und dass die Fernsteuerung und/oder Fernüberwachung des Betriebs des weiteren Haushaltsgeräts (13) auch unter Zugriff auf die Daten desselben Benutzerkontos des ersten Benutzers (U1) erfolgt, **dadurch gekennzeichnet, dass** auf dem Internetserver (2) ein von dem einen Benutzerkonto des ersten Benutzers (U1) separates weiteres Benutzerkonto eines zweiten Benutzers (U2) geführt wird, wobei sowohl auf dem einen als auch auf dem weiteren Benutzerkonto Daten bezüglich des Haushaltsgeräts (9) und des weiteren Haushaltsgeräts (13) abgelegt werden, sodass die Fernsteuerung und/oder Fernüberwachung der Haushaltsgeräte (9, 13) wahlweise unter Zugriff auf das eine oder das weitere Benutzerkonto durchgeführt wird, wobei die Daten bezüglich des Haushaltsgeräts (9) zunächst auf dem einen Benutzerkonto des ersten Benutzers (U1) abgelegt werden und das Ablegen der Daten bezüglich dieses Haushaltsgeräts (9) auf dem weiteren Benutzerkonto des zweiten Benutzers (U2) unter der Voraussetzung erfolgt, dass der Internetserver (2) eine Zustimmungsnachricht des ersten Benutzers (U1) empfängt, welche unter Zugriff auf das eine Benutzerkonto des ersten Benutzers (U1) generiert wird.

2. Verfahren nach Anspruch 1, **dadurch gekennzeichnet, dass** die Fernsteuerung und/oder Fernüberwachung mithilfe eines tragbaren Kommunikationsendgeräts als Kommunikationsgerät (4) erfolgt.

3. Verfahren nach einem der vorhergehenden Ansprüche, **dadurch gekennzeichnet, dass** bei der Fernsteuerung und/oder Fernüberwachung durch das Kommunikationsgerät (4, 6) überprüft wird, ob das Kommunikationsgerät (4, 6) ein Netzwerksignal eines Routers (10, 14) des Heimnetzwerks (11, 15) des jeweiligen Haushaltsgeräts (9, 13) empfängt, und:
- falls das Kommunikationsgerät (4, 6) das Netzwerksignal empfängt, die Fernsteuerung und/oder Fernüberwachung alleine über das Heimnetzwerk (11, 15) durchgeführt wird, und
- falls das Kommunikationsgerät (4, 6) kein Netzwerksignal empfängt, die Fernsteuerung und/oder Fernüberwachung unter Vermittlung des Internetservers (2) über das Internet (3) durchgeführt wird.

4. Verfahren nach einem der vorhergehenden Ansprüche, **dadurch gekennzeichnet, dass** ein Benutzerkonto eines Benutzers (U1, U2) auch nach dem Beenden einer durchgeführten Fernsteuerung und/oder Fernüberwachung eines Haushaltsgeräts (9, 13) mit dem Kommunikationsgerät (4, 6) auf dem Internetserver (2) abgelegt bleibt.

5. Verfahren nach Anspruch 4, **dadurch gekennzeichnet, dass** bei einer zukünftigen weiteren gewollten Fernsteuerung und/oder Fernüberwachung eines Haushaltsgeräts (9, 13) mit dem Kommunikationsgerät (4, 6) durch einen Benutzer (U1, U2) eine Berechtigungsprüfung des Benutzers (U1, U2) anhand des abgelegten Benutzerprofils durchgeführt wird.

6. System (1) zur Fernsteuerung und/oder Fernüberwachung des Betriebs eines an ein lokales Heimnetzwerk (11) angebundenen Haushaltsgeräts (9) zur Haushaltsführung, mit einem Kommunikationsgerät (4) und einem Internetserver (2), welche zur Kommunikation miteinander ausgebildet sind, wobei auf dem Internetserver (2) ein Benutzerkonto eines ersten Benutzers (U1) des Kommunikationsgeräts (4) bereitgestellt ist, auf welchem Daten bezüglich des Haushaltsgeräts (9) abgelegt sind, und wobei das Kommunikationsgerät (4) dazu ausgelegt ist, die Fernsteuerung und/oder Fernüberwachung des Haushaltsgeräts (9) unter Zugriff auf die Daten des Benutzerkontos der ersten Benutzers (U1) und unter Vermittlung des lokalen Heimnetzwerks (11) durchzuführen, wobei auf demselben Benutzerkonto des ersten Benutzers (U1) zusätzlich Daten bezüglich eines weiteren Haushaltsgeräts (13), welches an ein von dem einen Heimnetzwerk (11) separates weiteres Heimnetzwerk (15) angeschlossen ist, abgelegt sind, und dass das Kommunikationsgerät (4) dazu ausgelegt ist, die Fernsteuerung und/oder Fernüberwachung des Betriebs des weiteren Haushaltsgeräts (13) auch unter Zugriff auf die Daten desselben Benutzerkontos des ersten Benutzers (U1) durchzuführen, **dadurch gekennzeichnet, dass**
auf dem Internetserver (2) ein von dem einen Benutzerkonto des ersten Benutzers (U1) separates weiteres Benutzerkonto eines zweiten Benutzers (Ü2) geführt wird und der Internetserver (2) dazu eingerichtet ist, die Daten bezüglich des Haushaltsgeräts (9) auf dem weiteren Benutzerkonto des zweiten Benutzers (U2) unter der Voraussetzung abzulegen, dass der Internetserver (2) eine Zustimmungsnachricht des ersten Benutzers (U1) empfängt, welche unter Zugriff auf das eine Benutzerkonto des ersten Benutzers (U1) generiert wird, sodass die Fernsteuerung und/oder Fernüberwachung der Haushaltsgeräte (9, 13) wahlweise unter Zugriff auf das eine oder das weitere Benutzerkonto durchgeführt wird.

## Claims

1. Method for the remote control and/or remote monitoring of the operation of a household appliance (9, 13) for housekeeping purposes with the aid of a communication device (4) of a first user (U1), wherein the household appliance (9) is connected to a local home network (11) and the communication device (4) communicates with an Internet server (2), on which a user account of the first user (U1) is kept, on which data relating to the household appliance (9) is stored, and wherein the remote control and/or remote monitoring of the household appliance (9) takes place by way of the communication device (4) with access to the data of the user account of the first user (U1) and with the local home network (11) acting as an intermediary, wherein data relating to a further household appliance (13), which is connected to a further home network (15) separate from the one home network (11), is additionally stored on the same user account of the first user (U1), and that the remote control and/or remote monitoring of the operation of the further household appliance (13) also takes place with access to the data of the same user account of the first user (U1), **characterised in that** a further user account of a second user (U2) which is separate from the one user account of the first user (U1) is kept on the Internet server (2), wherein data relating to the household appliance (9) and the further household appliance (13) is stored on both the one and the further user account, so that the remote control and/or remote monitoring of the household appliances (9, 13) is optionally performed with access to the one or the further user account, wherein the data relating to the household appliance (9) is initially stored on the one user account of the first user (U1) and the storing of the data relating to said household appliance (9) on the further user account of the second user (U2) takes place on the condition that the Internet server (2) receives an approval message of the first user (U1), which is generated with access to the one user account of the first user (U1).

2. Method according to claim 1, **characterised in that** the remote control and/or remote monitoring takes place with the aid of a portable communication terminal as communication device (4).

3. Method according to one of the preceding claims, **characterised in that** during the remote control and/or remote monitoring the communication device (4, 6) checks whether the communication device (4, 6) is receiving a network signal of a router (10, 14) of the home network (11, 15) of the respective household appliance (9, 13), and:
- if the communication device (4, 6) receives the network signal, the remote control and/or remote monitoring is performed solely via the home network (11, 15), and
- if the communication device (4, 6) does not receive a network signal, the remote control and/or remote monitoring is performed via the Internet (3), with the Internet server (2) acting as an intermediary.

4. Method according to one of the preceding claims, **characterised in that** a user account of a user (U1, U2) also remains stored on the Internet server (2) once a performed remote control and/or remote monitoring of a household appliance (9, 13) using the communication device (4, 6) has concluded.

5. Method according to claim 4, **characterised in that** on a future further desired remote control and/or remote monitoring of a household appliance (9, 13) using the communication device (4, 6) by a user (U1, U2), an authorisation check of the user (U1, U2) is performed on the basis of the stored user profile.

6. System (1) for the remote control and/or remote monitoring of the operation of a household appliance (9) connected to a local home network (11) for housekeeping purposes, with a communication device (4) and an Internet server (2), which is embodied for communicating with one another, wherein a user account of a first user (U1) of the communication device (4) is provided on the Internet server (2), on which user account data relating to the household appliance (9) is stored, and wherein the communication device (4) is designed to perform the remote control and/or remote monitoring of the household appliance (9) with access to the data of the user account of the first user (U1) and with the local home network (11) acting as an intermediary, wherein data relating to a further household appliance (13), which is connected to a further home network (15) separate from the one home network (11), is additionally stored on the same user account of the first user (U1), and that the communication device (4) is designed to also perform the remote control and/or remote monitoring of the operation of the further household appliance (13) with access to the data of the same user account of the first user (U1), **characterised in that**
a further user account of a second user (U2) which is separate from the one user account of the first user (U1) is kept on the Internet server (2), and the Internet server (2) is configured to store data relating to the household appliance (9) on the further user account of the second user (U2) on the condition that the Internet server (2) receives an approval message of the first user (U1), which is generated with access to the one user account of the first user (U1), so that the remote control and/or remote monitoring of the household appliances (9, 13) is optionally performed with access to the one or the further user account.

## Revendications

1. Procédé destiné à la télécommande et/ou à la télésurveillance du fonctionnement d'un appareil ménager (9, 13) pour la gestion ménagère à l'aide d'un appareil de communication (4) d'un premier utilisateur (U1), l'appareil ménager (9) étant relié à un réseau domestique (11) local et l'appareil de communication (4) communiquant au moyen d'un serveur Internet (2) sur lequel un compte utilisateur du premier utilisateur (U1) est géré, sur lequel des données relatives à l'appareil ménager (9) sont mémorisées, et la télécommande et/ou la télésurveillance de l'appareil ménager (9) étant réalisées par l'appareil de communication (4) en accédant aux données du compte utilisateur du premier utilisateur (U1) et par l'intermédiaire du réseau domestique (11) local, des données supplémentaires relatives à un appareil ménager (13) supplémentaire, lequel est connecté à un réseau domestique (15) supplémentaire séparé de l'un réseau domestique (11), étant mémorisées sur le même compte utilisateur du premier utilisateur (U1), et la télécommande et/ou la télésurveillance du fonctionnement de l'appareil ménager (13) supplémentaire étant également réalisées en accédant aux données du même compte utilisateur du premier utilisateur (U1), **caractérisé en ce qu'**un compte utilisateur supplémentaire, séparé du compte utilisateur du premier utilisateur (U1), d'un deuxième utilisateur (U2) est géré sur le serveur Internet (2), des données relatives à l'appareil ménager (9) et à l'appareil ménager (13) supplémentaire étant mémorisées aussi bien sur l'un compte utilisateur que sur le compte utilisateur supplémentaire, de sorte que la télécommande et/ou la télésurveillance des appareils ménagers (9, 13) sont réalisées au choix en accédant à l'un compte utilisateur ou au compte utilisateur supplémentaire, les données relatives à l'appareil ménager (9) étant d'abord mémorisées sur le compte utilisateur du premier utilisateur (U1) et la mémorisation des données relatives à cet appareil ménager (9) étant réalisée sur le compte utilisateur supplémentaire du deuxième utilisateur (U2) à condition que le serveur Internet (2) reçoive un message d'accord du premier utilisateur (U1), lequel est généré en accédant au compte utilisateur du premier utilisateur (U1).

2. Procédé selon la revendication 1, **caractérisé en ce que** la télécommande et/ou la télésurveillance sont réalisées à l'aide d'un terminal de communication portable en tant qu'appareil de communication (4).

3. Procédé selon l'une quelconque des revendications précédentes, **caractérisé en ce que** lors de la télécommande et/ou de la télésurveillance, il est vérifié par l'appareil de communication (4, 6) si l'appareil de communication (4, 6) reçoit un signal de réseau d'un routeur (10, 14) du réseau domestique (11, 15) de l'appareil ménager (9, 13) respectif, et **en ce que** :
- au cas où l'appareil de communication (4, 6) reçoive le signal de réseau, la télécommande et/ou la télésurveillance sont réalisées uniquement par l'intermédiaire du réseau domestique (11, 15), et **en ce que**
- au cas où l'appareil de communication (4, 6) ne reçoive pas de signal de réseau, la télécommande et/ou la télésurveillance sont réalisées par le biais de l'Internet (3) par l'intermédiaire du serveur Internet (2).

4. Procédé selon l'une quelconque des revendications précédentes, **caractérisé en ce qu'**un compte utilisateur d'un utilisateur (U1, U2) reste mémorisé sur le serveur Internet (2) également après l'achèvement d'une télécommande réalisée et/ou d'une télésurveillance réalisée d'un appareil ménager (9, 13) à l'aide de l'appareil de communication (4, 6).

5. Procédé selon la revendication 4, **caractérisé en ce que** lors d'une autre télécommande et/ou d'une autre télésurveillance future souhaitée d'un appareil ménager (9, 13) à l'aide de l'appareil de communication (4, 6) par un utilisateur (U1, U2), une vérification d'autorisation de l'utilisateur (U1, U2) est réalisée à l'aide du profil utilisateur mémorisé.

6. Système (1) destiné à la télécommande et/ou à la télésurveillance du fonctionnement d'un appareil ménager (9) relié à un réseau domestique (11) local pour la gestion ménagère, comprenant un appareil de communication (4) et un serveur Internet (2), lesquels sont réalisés pour la communication entre eux, un compte utilisateur d'un premier utilisateur (U1) de l'appareil de communication (4) étant fourni sur le serveur Internet (2), sur lequel des données relatives à l'appareil ménager (9) sont mémorisées, et l'appareil de communication (4) étant configuré pour réaliser la télécommande et/ou la télésurveillance de l'appareil ménager (9) en accédant aux données du compte utilisateur du premier utilisateur (U1) et par l'intermédiaire du réseau domestique (11) local, des données supplémentaires relatives à un appareil ménager (13) supplémentaire, lequel est connecté à un réseau domestique (15) supplémentaire séparé de l'un réseau domestique (11), étant mémorisées sur le même compte utilisateur du premier utilisateur (U1), et l'appareil de communication (4) étant configuré pour réaliser la télécommande et/ou la télésurveillance du fonctionnement de l'appareil ménager (13) supplémentaire également en accédant aux données du même compte utilisateur du premier utilisateur (U1), **caractérisé en ce qu'**un compte utilisateur supplémentaire, séparé du compte utilisateur du premier utilisateur (U1), d'un deuxième utilisateur (U2) est géré sur le serveur Internet (2), et **en ce que** le serveur Internet (2) est configuré pour mémoriser les données relatives à l'appareil ménager (9) sur le compte utilisateur supplémentaire du deuxième utilisateur (U2) à condition que le serveur Internet (2) reçoive un message d'accord du premier utilisateur (U1), lequel est généré en accédant au compte utilisateur du premier utilisateur (U1), de sorte que la télécommande et/ou la télésurveillance des appareils ménagers (9, 13) sont réalisées au choix en accédant à l'un compte utilisateur ou au compte utilisateur supplémentaire.
